Europäisches Patentamt

European Patent Office

Office européen des brevets

(11) Veröffentlichungsnummer: **0 446 440 A2**

# EUROPÄISCHE PATENTANMELDUNG

(21) Anmeldenummer: 90123284.3

(22) Anmeldetag: 05.12.90

(51) Int. Cl.⁵: **G01P 1/02**

(30) Priorität: 07.02.90 DE 4003656

(43) Veröffentlichungstag der Anmeldung:
18.09.91 Patentblatt 91/38

(84) Benannte Vertragsstaaten:
AT BE CH DE DK ES FR GB GR IT LI LU NL SE

(71) Anmelder: **W. Günther GmbH**
**Virnsberger Strasse 51**
**W-8500 Nürnberg(DE)**

(72) Erfinder: **Müller, Rolf-Peter**
**Holzstrasse 37**
**W-8510 Fürth(DE)**

(74) Vertreter: **Tergau, Enno, Dipl.-Ing. et al**
**Tergau & Pohl Patentanwälte Hefnersplatz 3**
**Postfach 119347**
**W-8500 Nürnberg 11(DE)**

(54) Gehäuse-Bausatz für elektromechanische oder elektronische Sensoren.

㉗ Es wird ein Gehäuse-Bausatz für elektromechanische oder elektronische Sensoren, z.B. Tachogeber, beschrieben mit daran angeordneter Steckereinheit für den Anschluß von Hilfsspannungen und/oder die Abführung der im Sensor erzeugten elektrischen Signale. Der Bausatz besteht aus zwei seriell miteinander verbindbaren Teilen oder Teilekombinationen, nämlich einem Steuerteilgehäuse (1) und einem Steckergehäuse (2) mit integriertem elektromechanischen oder elektronischen Schaltelement. Das Steckergehäuse (2) kann in praktisch beliebiger Ausführungsform seitlich oder längsaxial angekuppelt werden.

_Fig. 8_

EP 0 446 440 A2

## GEHÄUSE-BAUSATZ FÜR ELEKTROMECHANISCHE ODER ELEKTRONISCHE SENSOREN

Die Erfindung betrifft einen Gehäuse-Bausatz für elektromechanische oder elektronische Sensoren, z.B. Tachogeber, mit daran angeordneter Steckereinheit für den Anschluß von Hilfsspannungen und/oder die Abführung der im Sensor erzeugten elektrischen Signale.

Derartige Sensoren sind bekannt und finden im Maschinenbau, Fahrzeugbau, in Überwachungsgeräten usw. vielfache Verwendung. Handelt es sich z.B. um einen Tachogeber, so besteht der Sensor aus einem Drehteil, welches mit einer Welle verbunden ist, die ihrerseits in Wirkverbindung mit dem zu überwachenden Teil steht. Das Drehteil trägt als Impulsgeber beispielsweise einen Ringmagneten, der auf seinem Umfang mit wechselweiser Polarisation magnetisiert ist. Im Wirkungsbereich dieses Ringmagneten ist ein magnetempfindlicher Schalter, beispielsweise ein Reed-Schalter angeordnet, der bei Umdrehung des Ringmagneten abwechselnd geschlossen und geöffnet wird und der folglich bei angelegter elektrischer Spannung eine Impulsfolge abgibt, deren Frequenz ein Maß für die Umdrehungsgeschwindigkeit des Magneten und damit auch des überwachten Teiles ist.

Anstelle des erwähnten Ringmagneten können auch andere geeignete Impulsgeber treten, beispielsweise ein Spiegelkranz, der den Lichtstrahl einer in der Nähe angeordneten Lichtquelle, beispielsweise einer Leuchtdiode, auf ein passend angeordnetes Empfängerelement, beispielsweise einen Fototransistor o.dgl. spiegelt. Da derartige Sensoren in unterschiedlicher technischer Ausgestaltung bekannt sind, soll die vorstehende Beschreibung lediglich beispielsweise verstanden werden.

Beim Bau derartiger elektromechanischer oder elektronischer Sensoren besteht die Schwierigkeit, daß je nach zukünftigem Einsatzgebiet die räumliche Anordnung, Ausführung und Größenbemessung der einzelnen Teile, insbesondere der Stecker, unterschiedlich gewählt werden muß, so daß für den Hersteller die Notwendigkeit besteht, entweder eine große Vielzahl von Ausführungsformen vorrätig zu halten oder aber jeden Einzelauftrag individuell zu erledigen und damit entsprechend aufwendig fertigen zu müssen.

Der Erfindung liegt die Aufgabe zugrunde, die Fertigung sowie die Lagerhaltung bei der Herstellung elektromechanischer oder elektronischer Sensoren zu vereinfachen. Zur Lösung dieser Aufgabe wird vorgeschlagen, das Gehäuse derartiger Sensoren nach dem Bausatzprinzip zu bauen, wobei der Bausatz aus zwei seriell miteinander verbindbaren Teilen oder Teilekombinationen besteht, nämlich einem Steuerteil-Gehäuse und einem Stecker-Gehäuse mit integriertem elektromechanischem oder elektronischem Schaltelement. Der Ausdruck "seriell miteinander verbindbaren Teilen" soll bedeuten, daß jedes Teil als Serie mit unterschiedlichen Abmessungen oder Bestückungen vorliegen kann, die jeweils mit dem anderen Teil verbindbar sind. Es ergibt sich auf diese Weise eine vielfache Kombinationsmöglichkeit, indem beispielsweise stets von der gleichen Gebereinheit ausgegangen wird, an die aber unterschiedliche Steckereinheiten beispielsweise seitlich oder auch längsaxial angekuppelt werden können. Bei den Steckern kann es sich dann je nach Bedarf um Flachstecker, Rundstecker, Dreifachstecker oder sonstige Ausführungsformen handeln. Der Anwender des gewünschten Sensors kann seine individuellen Steckerausgestaltungen praktisch frei wählen, wobei es dann für den Hersteller des Sensors lediglich erforderlich ist, diese Steckereinheit zu fertigen und sie mit der bereits fertigen, auf Lager befindlichen Steuereinheit zu kombinieren, also sie an diese anzukuppeln.

Die Kupplungsstelle kann dabei ein Schnappverschluß sein, der mit Schnappnasen ausgerüstet ist, die hinter entsprechende Vorsprünge des Steuerteilgehäuses greifen. Um sicherzustellen, daß trotz der großen Variabilität eines derartigen Bausatzes das fertig montierte Teil exakt funktioniert, wird vorgeschlagen, daß die miteinander verbindbaren Teile Verdrehsicherungen aufweisen, durch welche sie nur in einer bestimmten vorgegebenen Weise aneinandergesetzt werden können. Außerdem wird vorgeschlagen, in den Teilen Plombiernuten oder andere Plombiersicherungen anzubringen, so daß die Sensoreinheiten nicht von Unbefugten durch Lösen der Steckverbindung getrennt werden können.

Des weiteren wird vorgeschlagen, daß die miteinander zu kombinierenden Teile im Bereich ihrer Kupplungsstellen Dichtelemente tragen. Es ist dies vorteilhaft, damit an den Kupplungsstellen weder Feuchtigkeit noch Staub eindringen, noch Schmiermittel, welches zum Schmieren er sich drehenden Teile erforderlich ist, austreten kann. Desgleichen liegt es im Bereich des Erfindungsgedankens, die miteinander zu kuppelnden Teile miteinander zu verschweißen oder zu verkleben, so daß einmal richtig montierte und endgeprüfte Teile anschließend nicht mehr auseinandergenommen oder verändert werden können.

Die Erfindung wird im folgenden anhand der beigefügten Zeichnung näher erläutert. Es stellen dar:

Fig. 1 eine Ausführungsform eines Stecker-Gehäuses mit Schaltelement im Längsschnitt;

Fig. 2 eine Ausführungsform einer Abdeckkappe für das Steuerteilgehäuse;

Fig. 3 eine Ausführungsform eines magnetischen Gebers für das Steuerteil;

Fig. 4 eine Ausführungsform eines Trägerteiles für das Steuerteilgehäuse in der Seitenansicht;

Fig. 5 einen Querschnit durch das Steuerteil;

Fig. 6 und 7 Längsschnitte durch verschiedene Ausführungsformen des Steckerteils;

Fig. 8 Seitenansichten des zusammengesetzten Sensors bei seitlich angesetztem Steckerteil;

Fig. 9 eine Draufsicht auf ds Teil gemäß Fig. 8;

Fig. 10-13 Einzelteildarstellungen des Gesamtbausatzes für längsaxial angekuppelten Stecker;

Fig. 14-17 Einzelteildarstellungen entsprechend den Fig. 10-13, jedoch nach einer Drehung um 90°.

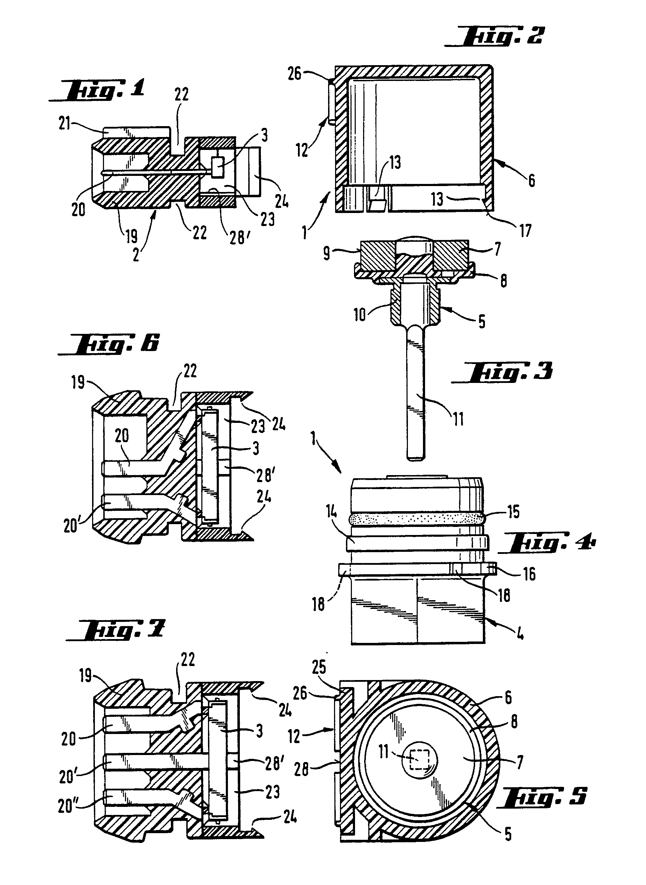

In den Fig. 1-4 ist eine Ausführungsform eines Gehäuse-Bausatzes für elektromechanische oder elektronische Sensoren, z.B. Tachogeber, vereinfacht dargestellt. Der Bausatz besteht grundsätzlich aus zwei seriell miteinander verbindbaren Teilen oder Teilekombinationen, nämlich einem Steuerteilgehäuse 1 und einem Stecker-Gehäuse 2, letzteres mit integriertem elektromechanischem oder elektronischem Schaltelement 3. Das Steuerteilgehäuse 1 ergibt sich in Form eines Explosionsmodells aus den Fig. 2,3 und 4.

Beim dargestellten Ausführungsbeispiel besteht das Steuerteilgehäuse 1 aus einem Trägerteil 4 (Fig. 4), einem Impulsgeberteil 5 (Fig. 3) und einer Abdeckkappe 6 (Fig. 2).

Das Impulsgeberteil 5 besteht im dargestellten Ausführungsbeispiel aus einem Ringmagneten 7, der auf einer Auflage 8 befestigt ist. Der Ringmagnet 7 kann beispielsweise so magnetisiert sein, daß sich auf seiner äußeren Mantelfläche 9 eine wechselnde Folge von magnetischen Nord- und Südpolen befindet.

Die Auflage 8 ist über einen Lagerhals 10 drehbar im Trägerteil 4 gelagert und geht am unteren Ende in eine Welle 11 über. Diese Welle steht im Gebrauchsfall in Wirkverbindung mit einem zu überwachenden Drehteil, beispielsweise über Zahnräder, Reibräder, flexible oder starre Drehwellen o.dgl.

Die Abdeckkappe 6 ist wenigstens mit einer Kupplungsstelle 12 für die Ankupplung eines Stecker-Gehäuses 2 ausgerüstet. Bei dem in Fig. 2 dargestellten Ausführungsbeispiel befindet sich diese Kupplungsstelle am Außenumfang der Abdeckkappe, so daß das Stecker-Gehäuse 2 im rechten Winkel zur Längsachse des Steuerteilgehäuses 1 angekuppelt wird.

Die Abdeckkappe 6 weist am unteren Rand wenigstens zwei Schnappnasen 13 auf, die bei zusammengesetztem Steuerteil 1 unter den Rastring 14 des Trägerteiles 4 greift und die Abdeckkappe festhalten. Besser ist es, wenn drei derartige Schnappnasen mit gleichem Abstand voneinander über dem Umfang verteilt sind. Das Trägerteil 4 weist noch einen Dichtring 15 auf, der sich im zusammengesetzten Zustand des Steuerteilgehäuses an die innere Mantelfläche der Abdeckkappe anlegt. Ferner weist das Trägerteil 4 einen Anschlagflansch 16 auf, gegen den im zusammengesetzten Zustand die Stirnfläche 17 der Abdeckkappe 6 anliegt.

Das Trägerteil 4 weist am Anschlagflansch 16, über den Umfang verteilt, Entrastungskerben 18 auf, welche die Abnahme der Abdeckkappe nach deren Verdrehen gegen das Trägerteil 4 und Entrasten der Schnappnasen 13 ermöglichen.

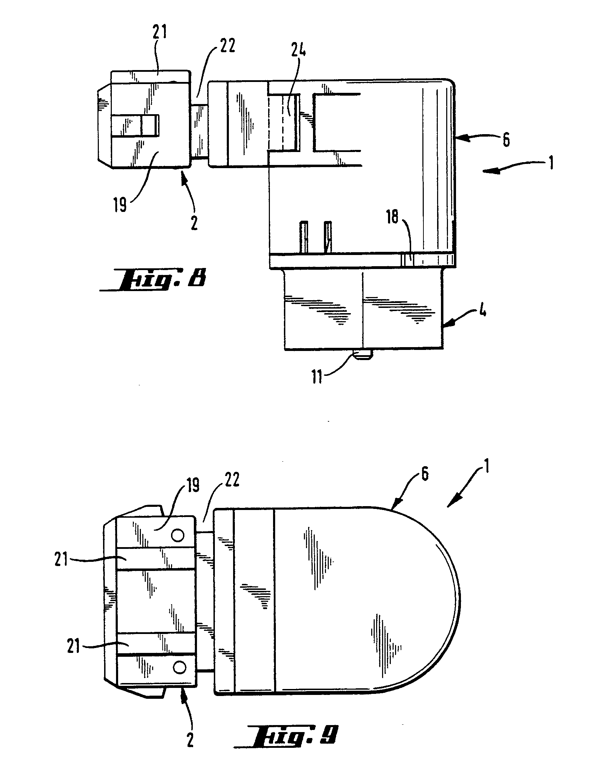

Fig. 5 zeigt das Steuerteil-Gehäuse im Querschnitt. Gleiche Teile sind mit gleichen Bezugszeichen bezeichnet. Zusätzlich erkennbar ist die in Form einer Nut angebrachte Verdrehsicherung 28, welche mit einer entsprechenden Rippe 28' am Steckerteil 19 zusammenwirkt.

Das in Fig. 1 dargestellte und dort als Ganzes mit 2 bezeichnete Stecker-Gehäuse besteht aus dem speziellen Steckerteil 19 mit darin angeordneten Steckzungen 20. Das Teil ist mit einem oder mehreren Sicherungsstegen 21 ausgerüstet, welche gegen Kupplungsverwechslungen schützen. Es weist des weiteren Plombiernuten 22 auf. Die Nuten werden benötigt, um zu verhindern, daß die Steckverbindung mißbräuchlich von Unbefugten getrennt wird.

Das Stecker-Gehäuse 2 weist schließlich noch einen der Kupplungsstelle 12 zugewandten Aufnahmeraum 23 für ein Schaltelement 3 auf. Bei diesem Schaltelement kann es sich um ein magnetfeldempfindliches Element, beispielsweise einen Reed-Schalter, aber auch um ein elektrisches Element, beispielsweise um einen Fototransistor o.dgl. handeln.

In den Fig. 6 und 7 sind spezielle Ausführungsformen verschiedener Stecker-Gehäuse 2 dargestellt. Die Darstellung ist gegenüber Fig. 1 um 90° um die Längsachse gedreht. Das Stecker-Gehäuse gemäß Fig. 6 ist mit zwei Steckzungen 20,20' ausgerüstet. Bei dem Stecker-Gehäuse gemäß Fig. 7 sind drei Steckzungen 20,20',20'' montiert. Die Fig. 6 und 7 lassen erkennen, daß die Stecker-Gehäuse an ihrer Kupplungsseite jeweils mit Rastnasen 24 ausgerüstet sind, die beim Ankuppeln des Stecker-Gehäuseteiles 2 an das Steuerteilgehäuse 1 hinter die Rastleisten 25 greifen. Es kommt auf diese Weise eine funktionsgerechte Verbindung der Teile zustande, welche gegebenenfalls noch durch nachträgliches Kleben oder Schweißen stabilisiert werden kann. Ein Dichtansatz 26 dichtet die Einheit nach außen feuchtigkeits- und staubdicht ab.

Die Fig. 8 und 9 zeigen das Gehäuse im zusammengesetzten Zustand. Das Stecker-Gehäuse 2 ist seitlich angekuppelt.

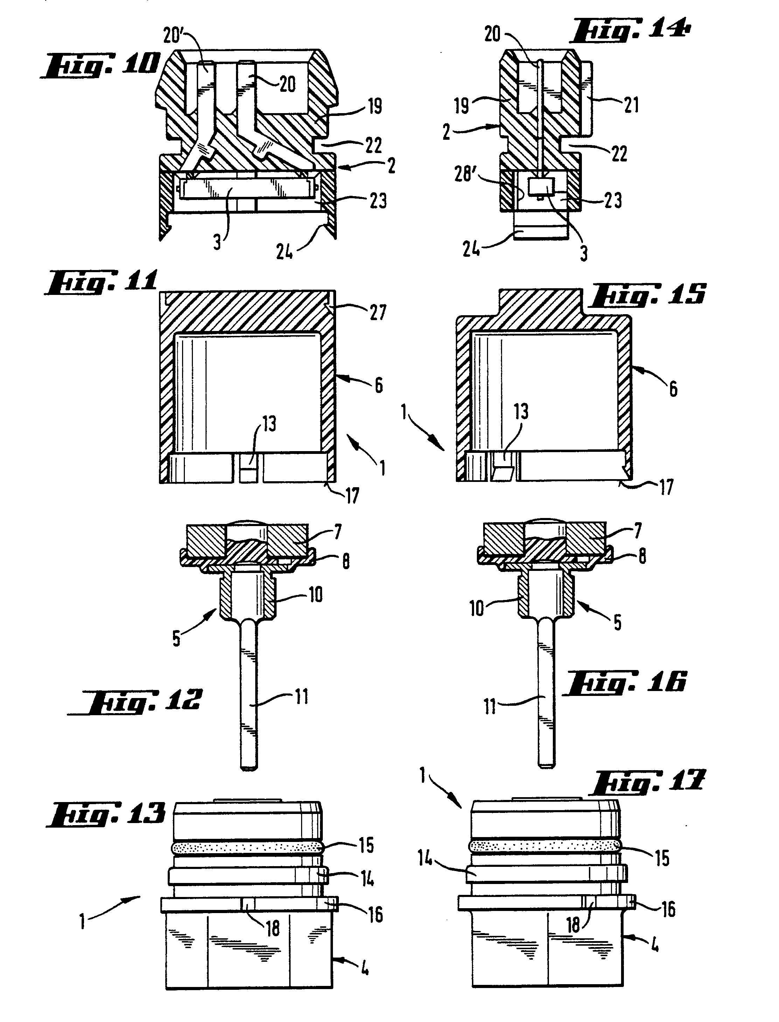

Die Fig. 10-13 sowie 14-17 zeigen eine andere Ausführungsform des Gehäuse-Bausatzes, bei welchem das Stecker-Gehäuse 2 längsaxial an die obere Stirnfläche der Abdeckkappe angekuppelt wird. Um Wiederholungen zu vermeiden, sind funktionsgleiche Teile mit gleichen Bezugszeichen ausgestattet.

Zum Ankuppeln ist das Stecker-Gehäuse 2 wiederum und in gleicher Weise mit Rastnasen 24 ausgerüstet. Ein Unterschied liegt lediglich in der Ausgestaltung der Abdeckkappe 6, welche in diesem Fall mit entsprechenden Rast-Hinterschneidungen 27 im oberen Stirnbereich ausgerüstet ist. Im übrigen sind die Teile gleich oder entsprechend ausgestaltet, damit auch hier Maßnahmen zur Plombiersicherung, Verdrehsicherung u.dgl. getroffen werden.

Bezugszeichenliste

| 1 | Steuerteil-Gehäuse |
|---|---|
| 2 | Stecker-Gehäuse |
| 3 | Schaltelement |
| 4 | Trägerteil |
| 5 | Impulsgeberteil |
| 6 | Abdeckkappe |
| 7 | Ringmagnet |
| 8 | Auflage |
| 9 | Mantelfläche von 7 |
| 10 | Lagerhals |
| 11 | Welle |
| 12 | Kupplunsstelle |
| 13 | Schnappnase |
| 14 | Rastring |
| 15 | Dichtring |
| 16 | Anschlagflansch |
| 17 | Stirnfläche |
| 18 | Entrastungskerbe |
| 19 | spez. Steckerteil |
| 20,20',20" | Steckzunge |
| 21 | Sicherungssteg |
| 22 | Plombiernut |
| 23 | Aufnahmeraum |
| 24 | Rastnasen |
| 25 | Rastleisten |
| 26 | Dichtansatz |
| 27 | Rast-Hinterschneidungen |
| 28 | Verdrehsicherung/Nut |
| 28' | Rippe |

## Patentansprüche

1. Gehäuse-Bausatz für elektromechanische oder elektronische Sensoren, z.B. Tachogeber, mit daran angeordneter Stecker-Einheit für den Anschluß von Hilfsspannungen und/oder die Abführung der im Sensor erzeugten elektrischen Signale,
dadurch gekennzeichnet,
daß der Bausatz aus zwei seriell miteinander verbindbaren Teilen oder Teile-Kombinationen besteht, nämlich
einem Steuerteil-Gehäuse (1) und
einem Stecker-Gehäuse (2) mit integriertem elektromechanischen oder elektronischen Schaltelement (3).

2. Gehäuse-Bausatz nach Anspruch 1,
dadurch gekennzeichnet,
daß das Steuerteil-Gehäuse (1) eine Abdeckkappe (6) aufweist, an der wenigstens eine Kupplungsstelle (12) für ein Stecker-Gehäuse (1) angeordnet ist.

3. Gehäuse-Bausatz nach Anspruch 2,
dadurch gekennzeichnet,
daß die Kupplungsstelle (12) ein Schnappverschluß mit Schnappnasen (13) und Vorsprüngen (14) bzw. Hinterschneidungen (27) ist.

4. Gehäuse-Bausatz nach einem der Ansprüche 1-3,
dadurch gekennzeichnet,
daß die miteinander zu kombinierenden Teile im Bereich ihrer Kupplungsstellen (12) Dichtelemente (15) tragen.

5. Gehäuse-Bausatz nach einem der Ansprüche 1-4,
dadurch gekennzeichnet,
daß das Steuerteil-Gehäuse (1) aus einem Trägerteil (4) einem Geber (5) sowie der Abdeckkappe (6) besteht.

6. Gehäuse-Bausatz nach Anspruch 1,
dadurch gekennzeichnet,
daß das Steckerteil (2) einen der Kupplungsstelle (12) zugewandten Aufnahmeraum (23) für das Schaltelement (3) aufweist.

7. Gehäuse-Bausatz nach einem der vorausgehenden Ansprüche,
dadurch gekennzeichnet,
daß die miteinander verbindbaren Teile (1,2) Verdrehsicherungen (28) aufweisen.

8. Gehäuse-Bausatz nach einem der vorausgehenden Ansprüche,
dadurch gekennzeichnet,
daß die miteinander verbindbaren Teile (1,2) Plombiernuten (22) aufweisen.

*Fig. 2*

*Fig. 1*

*Fig. 6*

*Fig. 3*

*Fig. 4*

*Fig. 7*

*Fig. 5*

_Fig. 8_

_Fig. 9_

EP 0 446 440 A2

Fig. 10
Fig. 11
Fig. 12
Fig. 13
Fig. 14
Fig. 15
Fig. 16
Fig. 17

7